# EUROPEAN PATENT APPLICATION

(11) **EP 0 750 383 A1**
(43) Date of publication of application: **27.12.1996**
(21) Application number: 95830256.4
(22) Date of filing: 20.06.1995
(51) Int. Cl.: H02J 3/14

(54) **Automatic user load selection and reset in a "total electric power load management system"**

(71) Applicant: Spena, Arnaldo, I-00141 Rome (IT)
(72) Inventor: Spena, Arnaldo, I-00141 Rome (IT)

(57) **Abstract**

The techniques of load reduction on the electric network used today by the electric companies imply the disconnection, via dynamic limiting tele-switch of the electric utility, of the user load, including the essential loads like alarm systems, control and monitoring systems, et similia.
The automatic reset is impossible for security reasons so that even the essential load can be reconnected to the power supply system only if and when user is able to reset manually the connection.
In fact there is an absolute impossibility, even for security reasons, to perform an automatic tele-reset of the above mentioned dynamic limiting tele-switch of the electric utility.
These difficulties are overlooked by the present automatic load and reset system that gives to the user the possibility to divide and manage his load in essential and non essential load. Moreover via the normally closed power tele-switch, used appropiately, the present system protects the essential user load, during the network load rduction operation, disconnecting the non essential user load.

## Description

The present invention concerns a tool able to an automatic reset of the user's electric load after a temporany gap of the delivered electric power managed by a 〈〈load management system〉〉.

It is well know that the electric energy production and delivery systems are negatively affected by peak loads which substantially reduce their overall energy efficiency thus lovering the system utilization factor.
It is also well known that the electric delivery systems are always over-booked, that is **ΣP**_{**c**}**>>ΣP**_{**d**}, where **ΣP**_{**c**} is the total electric power sold to the users and Σ**P**_{**d**} is the total electric power available. The ratio Σ**P**_{**c**}**/ΣP**_{**d**} is approximately equal to **4 or 5**. However statistically we have **ΣP**_{**r**}**<ΣP**_{**d**} where **ΣP**_{**r**} is the total electric power requested by the users. Let **α=ΣP**_{**r**}**/ΣP**_{**d**}, small values of **α** correspond to hight security but low efficiency of the system.
It is also known that the electric delivery systems, by their own nature, do not have selfcontrol abilities so that extreme conditions may cause partial or total 〈〈blackout〉〉.

A tentative way of regulating the power requested to the system is based on special contracts and discounts to special classes of users. This way of regulating the power requested on the elctric network is not satisfactory since the final decision is left to the user. Alternatively it is possible to regulate the available power diconnecting some zones of users. This way of proceeding is, howevwer, seldom possible or technically convenient.

However it is well known an automatic control system to manage the total load of an electric delivery system. This system is the object of the Italian patent (I-1116192 of 28 May 1979), the English patent (GB-2054291b of 27 May 1980), the European patent (EPO-20310 of 23 May 1980 extented to AT BE CH DE FR LI LU NL SE) and is also the object of a recent pilot application in italian electric utility.
This system and his application simulate, when the authority that furnish the available power believe it necessary, a reduction of the power **P**_{**c**} contractually available to the users. That is the power **P**_{**c**} is reduced to **P'**_{**c**}**=KP**_{**c**}, with **0<K<1**, so that when an user is in a over-load situation with respect to this new simulated contract (i.e. **P**_{**r**}**>P'**_{**c**}) he will be disconnected from the electric delivery system. The coefficient **K** is a coefficient of forced reduction of the available power to the user and it is always greater than zero and smaller or equal to **1**.

After the disconnection of the user from the electric network via a dinamic limiting tele-switch, settled by the electric utility to protect from short circuit, the automatic tele-reset is prohibited for security reasons. That is the reconnection to the power supply system is possible with a manual reset if and only when the user is able to do it.

The purpose of the present invention, eliminating the above mentioned inconveniences, is the fact that the user will not be left completely disconnected from the delivery system or disconnected for a long period of time. This is pursued in two ways. The first way consists in giving an acoustic or optical warning to the user that could obtain the power back through a manual reset reducing his load. The second way, when the user is not there, guarantees the user that at the end of the 〈〈load reduction operation〉〉 his load will be reconnected.

This is realized as follows:
**a** - delaying in 〈〈the load management system〉〉 (1 second or 2 seconds) the operation of the dynamic limiting tele-switch, installed by the elctric utility, when the disconnection of the user from the system that takes place under the condition **P**_{**r**}**>P'**_{**c**}**=KP**_{**c**}. That is when the power required by the user **P**_{**r**} is greater than the reduced power **P'**_{**c**} that the electric company makes available to the user;
**b** - sending a command to a tool that disconnectes a fraction of the power load settled by the user. After this action the control is returned to the 〈〈load management system〉〉 that may, under certain conditions, stop from taking the next steps;
**c** - giving an acoustic and visual warning to the user and connecting a normally-closed tele-switch that disconnects part of the user load. The N.C. tele-switch is kept-on by a trigger & timer stage. This operation is repeated periodically once every few minutes during the operation of load management that requires usually a few hours to take place;
**d** - giving the chance to the user to reset manually his connection to the system after reducing the required power.

The advantages obtained with the present invention are the following;
**i)** if the user is present during the reduction load operation, the user can reduce this own load,
**ii)** if the user is not present during the reduction load operation then the user can keep active indifferables and indispensables devices such as alarm systems, monitoring and control systems, medical monitoring systems, automatic answering devices, food refrigerators, et similia, while the remaining part of the load is disconnected automatically by the load management system,
**iii)** the electric company can serve his technical economic regulatory and social issues rising a very efficient and effective electric power load management.

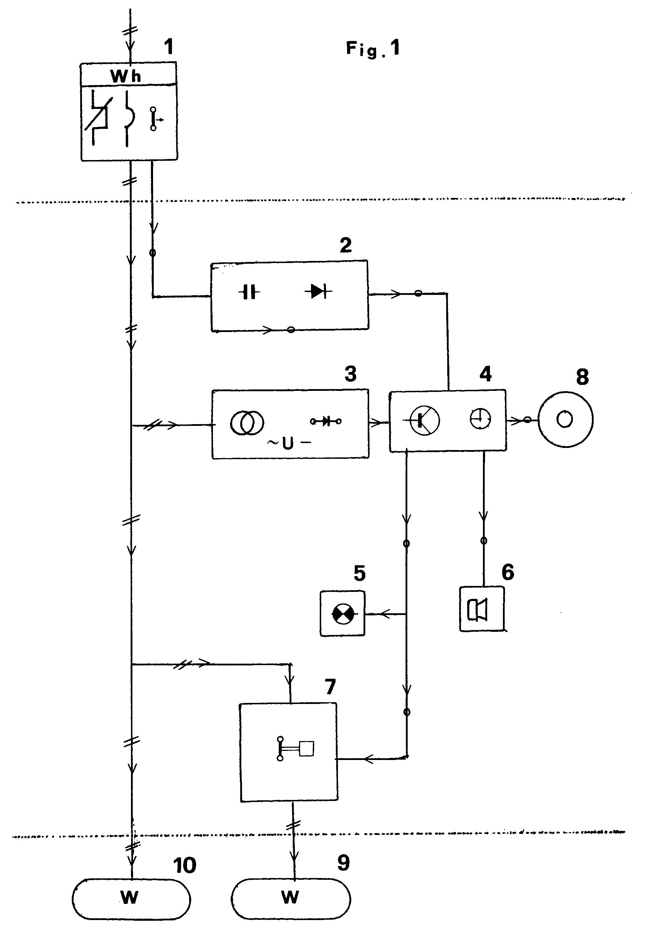

Figure 1 shows a preferred embodiment, according to the present invention, of the tool that in the user location provides the funtions "**b**", "**c**" **&** "**d**" under condition "**a**" as described above.
The tool is contained between the two dotted lines of Figure 1; above the dotted lines there is the **1** 〈〈meter and dynamic limiting teleswitch〉〉 of the electric company, and below the dotted lines is the load required by the user: i.e. **9** 〈〈non essential defferable user load〉〉 and **10** 〈〈essential indifferable user load〉〉 like above.
Moreover **2** is a 〈〈signal input stage〉〉 that is a disposal that reads the signal coming from **1** and give a command to the 〈〈trigger and timer stage〉〉 **4**. The trigger and timer stage **4** controls the 〈〈normally-closed tele-switch〉〉 **7**, the 〈〈warning hearing-aid〉〉 **6**, and the 〈〈warning light〉〉 **5**. The 〈〈reset〉〉 **8** can manually control the switch **7**.
The device **3** is a 〈〈power supply stage〉〉 of the entire circuit. The component of **2**, **4**(C.MOS digital C.I.) and **3** are chosen in such a way that the power necessary to keep them workimg is negligible in stand-by condition.

The operation of the system will be briefly described hereinbelow.
The arrival of a signal to the signal input stage **2** gives rise, in a time of about 1÷2% of a second, throught the action of the trigger and timer stage **4**, the warning light **5** and the acoustic warning **6** and the tele-switch **7** that disconnects the non essential loads **9** chosen by the user. Usually this reduction of load implies the stop of the signal coming to **2**, in this case the trigger and timer stage **4** keeps active, for a period of few minutes, the switch **7** and the warning light **5**, while the acoustic warning **6** is kept active only for a few seconds.
After this period of a few minutes the trigger and timer stage **4** turns off the switch **7** so that the load **9** is again connected with the power delivery system. If the internal condition (the load required by the user) and the external condition (the value of **K**) are unchanged a new signal will be received by the input stage **2** and the previous cycle will be repeated. This will go on until the internal and/or external conditions are changed in an appropiate way. If the user reduces is load he may interrupt the cycle of the timer and trigger stage **4** rising the manual reset **8**. If the power available by the power delivery system is greatly reduced it may happen that also after disconnecting the non essential load **9** the power required by the user exceeds the power available in this case **5** and **6** are activated for a short time after that the user is totally disconnected from the power delivery system, by utility device **1**, including the power stage **3**. So that only if the user puts its load almost entirely in **9** he is almost sure to keep always the remaining part of is load.

## Claims

1. An automatic reset tool that before the disconnection of the user load **(9,10)**, using a signal generated by the power delivery system, disconnects, using a properly managed normally-closed power tele-switch **(7)**, the non essential load of the user **(9)** making non necessary the disconnection of the full user load **(9,10)**, characterized by the fact that:
- the operational signal - in advance to the signal that, processed by meter **(1)**, will determine the disconnection of the user load, without any chance of a tele-reset - send by the meter & dynamic liniting tele-switch **(1)** to the signal input stage **(2)** and from this one to the trigger & timer stage **(4)** to disconnect the non essential user loads **(9)** in such a way that the dynamic limiting tele-switch **(1)** will be set-on,
- and by the fact that the disconnection of the non essential loads **(9)** is kept active by the trigger & timer stage **(4)** for a finite time, restarting the previous cycle once again, where, during this cycle the user, appropriately warned, when he is present there can disconnect some differable loads the 〈〈load management system〉〉 cannot satisfy.

2. A system as claimed in claim 1, in which via trigger and timer stage **(4)** repeat the control cycle infinitely many times as much as required by the electric company during the process of reducing the load on the elecric network.

3. A system as claimed in claim 1 and subsequent, which has an acoustic warning **(6)** that works for short period of time and gives the possibility to the user to reduce his non essential load **(9)** to use the reduced power available on the electric network.

4. A system as claimed in claim 1 and subsequent, which has a warning light **(5)** that remains active and gives to the user that is absent the possibility to act as in claim 3 when he comes back.

5. A system as claimed in claim 1 and subsequent, in which
is protected, as much as possible, the essential load **(10)** from the load reduction operation of electric company thanks to the continuous action of the N.C. power tele-switch **(7)** that disconnects the non essentual user load.

6. A system as claimed in claim 1 and subsequent, which has a power supply system **(3)** that in stand-by condition uses a negligible amounts of power.

7. A system as claimed in claim 1 and subsequent, which has a signal input stage that can receive and react to all kinds, formalities and qualities of incoming messages.
